(19) Europäisches Patentamt
European Patent Office
Office européen des brevets

(11) Publication number : 0 494 503 A1

(12) **EUROPEAN PATENT APPLICATION**

(21) Application number : 91311156.3

(22) Date of filing : 29.11.91

(51) Int. Cl.⁵ : **G06K 7/06, H04M 1/02**

(30) Priority : **13.12.90 GB 9027115**

(43) Date of publication of application :
**15.07.92 Bulletin 92/29**

(84) Designated Contracting States :
**DE DK FR GB IT NL SE**

(71) Applicant : **TECHNOPHONE LIMITED**
**Ashwood House Pembroke Broadway**
**Camberley Surrey GU15 3SP (GB)**

(72) Inventor : **Ashdown, Michael Brian**
**60 St. Margarets Grove, Great Kingshill**
**High Wycombe, Bucks HP15 6HP (GB)**

(74) Representative : **Frain, Timothy John**
**Technophone Limited Intellectual Property**
**Manager Ashwood House Pembroke**
**Broadway**
**Camberley, Surrey GU15 3SP (GB)**

(54) **Card reader.**

(57) A compact and mechanically simple smart card reader (2) comprises a card receiving compartment (3) into which a smart card (1) may be slidably inserted. The compartment (3) is hingedly mounted on a main body portion (12) of the card reader. Contact pads (4) on the card engage complementary contacts (13) in the card reader when the compartment (3) is manually closed. The card reader has no moving parts other than the pivotable card receiving compartment (3).

Fig. 1.

EP 0 494 503 A1

This invention relates to a card reader for reading a card comprising information storage means and contact pads connected thereto which enable stored information to be read from the card.

The card may be, for example, a so-called "smart card" which is usually slightly thicker than a conventional plastic credit card and which includes an integrated circuit device, commonly referred to as a "chip" in which information is stored. For this reason such cards are also often known as "chip cards". The integrated circuit or chip is connected to external contact pads on the card and these contact pads are engaged by contacts in the card reader to enable the card to be read.

Prior art card readers are known which have either an externally opening drawer or an internal carriage for receiving a card to be read. In the former case the drawer may be closed manually to move the card into a card reading position within the reader. In the latter case, the action of inserting the card through a slot causes the carriage to slide forward within the reader thus bringing the card into the position where it can be read. Conventionally, electrical contacts, for example in the form of leaf springs, are mounted on the drawer or carriage, and a mechanism is provided by means of which these contacts engage the contact pads on the card, at least when the card is in the card reading position.

In prior art card readers the card is generally introduced transversely to the contacts. However, because of the sliding movement of the card relative to the contacts, there is a risk that the contacts or possibly even the contact pads on the card may be damaged.

The prior art literature is replete with attempts to solve this problem, usually by arranging that the contacts are spaced apart from the card when the card is being inserted into the card reader. When the card is at - or almost at - the fully-inserted position the contacts are brought into engagement with the contact pads. These prior art arrangements tend to involve relatively complex, and hence consequently costly and cumbersome mechanisms.

For example, DE-A-3,343,757 discloses a card reader having an externally opening drawer into which the card to be read is placed. Electrical contacts in the form of leaf springs are mounted on the drawer and are biassed towards the card. When the drawer is opened to remove or insert a card a movable roller rides up a guide surface and lifts the leaf springs out of contact with the card enabling the card to be removed without damaging the card or the contacts. Closing the drawer causes the leaf springs to be lowered gradually until they engage the contact pads on the card only when the drawer has been fully closed.

DE-A-3,343,727 similarly discloses a card reader with an externally opening drawer and with leaf spring contacts mounted on the drawer, although in this case the leaf springs are evidently biassed away from the card so that when the drawer is open the leaf springs are spaced apart from the card enabling it to be inserted or removed without damage. When the drawer is closed the leaf springs abut a protruding block fixed to the main chassis of the card reader, which urges the contacts into engagement with the contact pads on the card at the point when the drawer is substantially fully closed. When the drawer is opened the leaf spring contacts return to their natural position spaced apart from the card.

Our co-pending European Patent Application No. EP-A-0,351,103 discloses a very slim and generally compact card reader for use with a smart card. A carriage is slidably mounted in a chassis and an abutment supports and guides the card as it is inserted into the reader. Card reading contacts are supported by a plinth which is spaced from the card when the carriage is in an initial card receiving position. Insertion of a card into the reader causes the carriage to slide along a lazy Z-shaped path generally in the direction of the card insertion towards a final card reading position and the carriage thus presses the card against the abutment causing the card to bend so that the contact pads are urged into engagement with the contacts on the plinth. Deflectable fingers on the carriage or the chassis grip the card and help to retain both the card and the carriage in the card reading position.

Figure 1 of EP-A-0,276,403 discloses a card reader having a hingedly mounted compartment comprising an integral card reader including contacts mounted therein. The card is inserted into the compartment transversely to the contacts and when the card reader compartment is closed the contacts are brought into engagement with the contact pads on the card.

Figures 3 to 8 of EP-A-0,276,403 disclose a card-receiving recess provided in a main body portion of the telephone. In this case the contacts are present in the recess (i.e. on the main body portion). The card is placed into the recess so that the contact pads are in loose contact with contacts in the recess.

A hingedly mounted door is disposed adjacent the recess. The action of closing the door behind the card presses the card into the recess whereby the contact pads on the card are urged against the contacts on the main body portion to provide a firm contact between the contacts and contact pads.

According to the present invention there is provided a card reader for reading a card comprising information storage means and contact pads connected thereto which enable the stored information to be read from the card, the card reader comprising a plurality of contacts for engaging the contact pads on the card to enable electrical connections to be made for reading information from the card, said contacts being present on a main body portion of the card reader, and card receiving means movable between a first position whereat the card may be inserted or removed and a second position whereat the contacts engage the contact pads on the card, wherein the card receiving means is hingedly mounted on the main body portion of the card reader.

A card reader in accordance with the invention has the advantage that the card is introduced to the contacts along a generally arcuate path determined by the hinged mounting of the card receiving means. Hence when the card receiving means is moved to the second position the contact pads on the card approach the contacts substantially orthogonally thereto. This avoids the risk of damage caused by the sliding action of the card in prior art card readers.

Furthermore, a card reader in accordance with the present invention can have an exceptionally straightforward design since there need be no moving parts other than the hingedly mounted card receiving means, which itself can be implemented very simply. Such a card reader can thus be manufactured more easily and less expensively than prior art card readers.

For optimum accessibility it is preferable if the card receiving means is hingedly mounted on an external part of the main body portion of the card reader. Hence the card can readily be inserted and removed when the card receiving means is in the first position.

In a preferred embodiment the card receiving means is adapted to hold the card in a predetermined position relative to the contacts. To this end the card reader suitably comprises a substantially flat face for supporting the card, abutment means for abutting the leading edge of the card when the card is inserted into the card receiving means, and means disposed laterally on the card receiving means for guiding the card during card insertion. The guiding means also provide lateral locating means. Thus, the card receiving means may be in the form of a generally pocket like compartment.

In a particularly straightforward embodiment of the invention the contacts are fixedly mounted on the main body portion of the card reader opposite the flat supporting face of the card receiving means.

Lock means may be provided to hold the card receiving means in the second (i.e. card reading) position.

An embodiment of the invention will now be described, by way of example, with reference to the accompanying drawings, in which:-

Figure 1 is a cross-section of part of a card reader in accordance with the invention.

Figure 2 is an inside perspective view of the card receiving compartment of the card reader in Figure 1, showing a card about to be inserted therein,

Figure 3 is an elevation of the card receiving compartment in Figure 2, showing a card fully inserted therein, and

Figure 4 is an enlarged cross-section of the lock mechanism of the card reader in Figure 1.

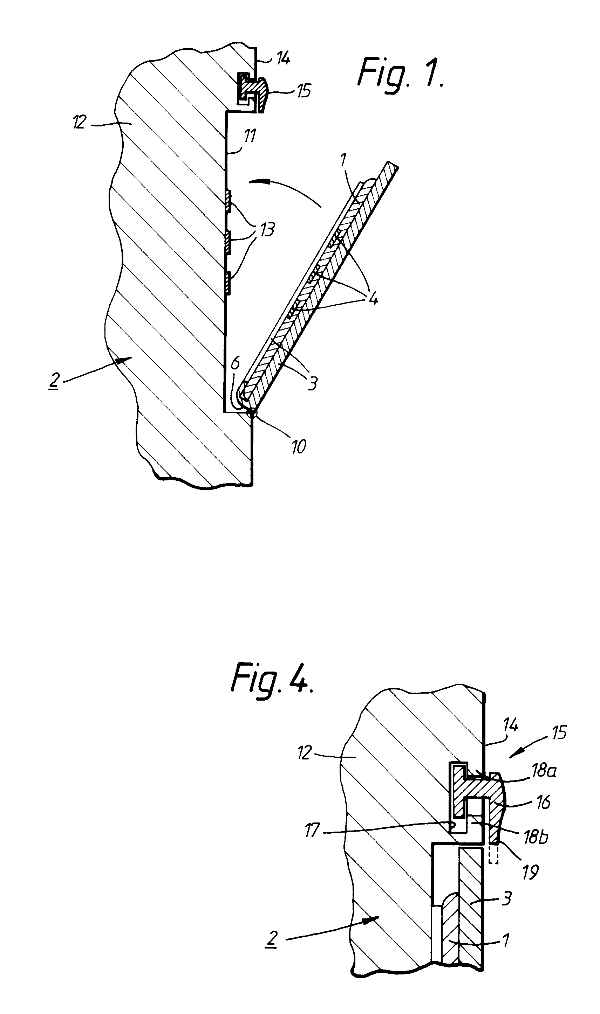

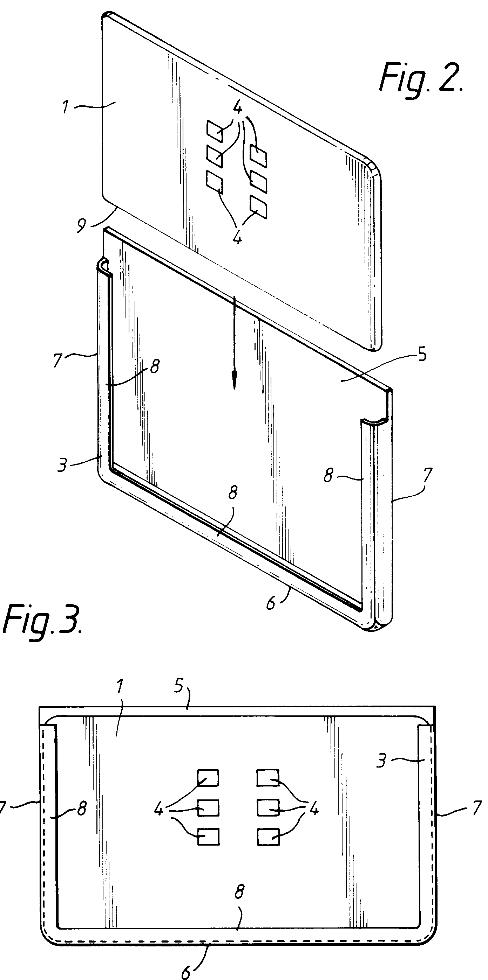

A smart card 1 is inserted into the smart card reader 2 by sliding it into a pocket-like card receiving compartment 3 in the direction of the arrow shown in Figure 2. The card comprises conductive contacts 4 on an external face thereof. As is usual, the contacts 4 are connected to an integrated circuit device including a memory for storing information, encapsulated within the card 1. The card 1 is inserted so that the contacts 4 face into the card reader (see Figure 1).

The compartment 3 comprises a generally flat rear face 5, a bottom flange 6, and two side flanges 7. A common lip 8 extends inwardly from the bottom and side flanges 6 and 7. The side flanges 7 guide the card 1 as it is inserted into the compartment 3. The depth of the side flanges 7 is such as to permit the card to be inserted and withdrawn easily, while the lip 8 restrains any excess movement in the direction normal to the card. When the card is fully inserted the leading edge 9 abuts the bottom flange 6 as shown in Figures 1 and 3.

The bottom of card compartment 3 is pivotally mounted by means of a hinge 10 at the base of recess 11 in the main body portion 12 of the reader 2. The size and shape of recess 11 are complementary to the card compartment 3. A group of conductive contacts 13 is provided in the rear wall of the recess 11 opposite the rear face 5 of the card compartment 3. The contacts 13 are connected to conventional card reading circuitry provided within the main body portion 12 of the card reader. The card reading circuitry is not itself directly relevant to the instant invention and is not described further.

In Figure 1 the card compartment 3 is shown in an open position where the card 1 can readily be inserted or removed. The hinge 10 may be adapted to restrict the compartment 3 opening by more than a predetermined angle, e.g. 30°. Alternatively, the same effect may be achieved by providing a suitable abutment extending from the main body portion 12 of the card reader.

The card reader 2 may be closed manually by moving the card compartment 3 in the direction of the arrow in Figure 1 whereby the contact pads 4 on the card eventually engage the contacts 13 in the reader when the rear face 5 of compartment 3 is substantially flush with the front face 14 of the main body portion 12 of the card reader. In view of the pivotal (hinge) mounting the contact pads 4 describe an arcuate path and therefore approach the contacts 13 substantially normal thereto. Hence there is no sliding or frictional effect between the card 1 and the contacts 13.

A simple locking mechanism 15 may be included in the card reader to hold the card compartment 3 in the closed, card reading position. This locking mechanism, shown more clearly in Figure 4 comprises a manually operable catch 16 slidably mounted in a recess 17 adjacent the front face 14 of the main body portion 12 of the card reader. The catch 16, which is generally H shaped and retained by two opposing lips 18a and 18b on the front face of the body portion 12, comprises a downwardly directed extended portion forming a lip 19 externally of the body portion 12. When the card compartment is in the closed position, as shown in Figure 4, the latch 16 may be slid downwards so that the lip 19 moves into the position shown by a broken line, at which it acts to lock the compartment 3 in the card reading position. The compartment 3 can readily be released by returning the latch 16 to its former position.

In view of the foregoing description it will be evident to a person skilled in the art that various modifications may be made within the scope of the present invention. For example, any suitable alternative locking mechanism may be employed, if required to lock the compartment in the card receiving position. Likewise any suitable hinge arrangement may be used for pivotally mounting the card compartment on the main body of the card reader. The compartment itself need not comprise continuous bottom and side wall portions, but may instead have discreet wall portions in the form of posts, ribs or strips, sufficient to provide respectively abutment and guidance means for the card. It is not necessary for the card to be slidably inserted into the card compartment.

Finally, it is noted that the card reader described herein is particularly simple to make and use and, because there are no moving parts other than the hinged card receiving compartment 3, it can be very compact in form. It is thus eminently suitable for inclusion in hand-held apparatus such as, for example, a portable radio telephone.

## Claims

1. A card reader (2) for reading a card (1) comprising information storage means and contact pads (4) connected thereto which enable the stored information to be read from the card, the card reader comprising

   a plurality of contacts (13) for engaging the contact pads on the card to enable electrical connections to be made for reading information from the card, said contacts being present on a main body (12) portion of the card reader, and

   card receiving means (3) movable between a first position whereat the card may be inserted or removed and a second position whereat the contacts engage the contact pads on the card, wherein the card receiving means is hingedly mounted on the main body portion of the card reader.

2. A card reader as claimed in claim 1, wherein the card receiving means is hingedly mounted on an external part of the main body portion of the card reader.

3. A card reader as claimed in claim 1 or claim 2, wherein the card receiving means is adapted to hold the card in a predetermined position relative to the contacts.

4. A card reader as claimed in any of the preceding claims, wherein the card receiving means comprises a substantially flat face (5) for supporting the card.

5. A card reader as claimed in claim 4, wherein the contacts are disposed on the main body portion of the card reader opposite the flat face of the card receiving means.

6. A card reader as claimed in any of the preceding claims, wherein the card receiving means comprises abutment means (6) for abutting the leading edge (9) of the card when the card is inserted into the card receiving means.

7. A card reader as claimed in any of the preceding claims, comprising means (7,8) disposed laterally on said card receiving means for guiding and locating the card.

8. A card reader as claimed in any of the preceding claims, wherein the card receiving means comprises a pocket-like compartment.

9. A card reader as claimed in any of the preceding claims, wherein the contacts are fixedly mounted on the main body portion of the card reader.

10. A card reader as claimed in any of the preceding claims, including locking means (15) for releasably maintaining the card receiving means in the second position.

11. A radio telephone comprising a card reader as claimed in any of claims 1 to 10.

*Fig. 1.*

*Fig. 4.*

_Fig. 2._

_Fig. 3._

European Patent Office

**EUROPEAN SEARCH REPORT**

Application Number

EP 91 31 1156

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 822 848 (ROBERT BOSCH GmbH)<br>* Whole document *<br>--- | 1-11 | G 06 K 7/06<br>H 04 M 1/02 |
| D,X | EP-A-0 276 403 (SIEMENS AG)<br>* Column 1, lines 18-55; column 2,<br>lines 1-12; figure 1 *<br>----- | 1-II | |

**TECHNICAL FIELDS SEARCHED (Int. Cl.5)**

G 06 K
H 04 M

The present search report has been drawn up for all claims

| Place of search | Date of completion of the search | Examiner |
|---|---|---|
| THE HAGUE | 17-03-1992 | HERSKOVIC M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)